## Europäisches Patentamt

## European Patent Office

## Office européen des brevets

(19)

(11) Veröffentlichungsnummer: **0 005 430**

**A2**

(12) **EUROPÄISCHE PATENTANMELDUNG**

(21) Anmeldenummer: **79100227.2**

(22) Anmeldetag: **26.01.79**

(51) Int. Cl.²: **F 01 D 1/34**
**B 01 F 5/12**

(30) Priorität: **16.05.78 DE 2821233**

(43) Veröffentlichungstag der Anmeldung:
**28.11.79 Patentblatt 79/24**

(84) Benannte Vertragsstaaten:
**FR GB IT SE**

(71) Anmelder: **Bachl, Herbert, Prof. Dr.**
**StolzingstraBe 4**
**D-8000 München 81(DE)**

(72) Erfinder: **Bachl, Herbert, Prof. Dr.**
**StolzingstraBe 4**
**D-8000 München 81(DE)**

(74) Vertreter: **Patentanwälte Dipl.-Ing. A. Grünecker,**
**Dr.-Ing. H. Kinkeldey, Dr.-Ing. W. Stockmair, et al,**
**Dr. rer. nat. K. Schumann, Dipl.-Ing. P. Jakob, Dr. rer. nat.**
**G. Bezold Maximilianstrasse 43**
**D-8000 München 22(DE)**

(54) **Strömungsmaschine.**

(57) Es wird eine Strömungsmaschine geschaffen, die wenigstens ein scheibenförmiges, Strömungskanäle für Strömungsmittel aufweisendes Laufrad umfaßt. Die Eintrittsöffnungen der Strömungskanäle befinden sich an der einen Seite des Laufrades, während die jeweiligen Austrittsöffnungen an der anderen Stirnseite angeordnet sind und alle Eintrittsöffnungen einen anderen Abstand zur Drehachse aufweisen, als die Austrittsöffnungen.

Jeder Strömungskanal besitzt ein radial ferneres und ein radial näheres Knie mit jeweils zwei Schenkeln, die miteinander etwa einen 90 Grad Winkel bilden. Ein Schenkel des einen Knies führt zu der Eintrittsöffnung hin und ist in Richtung der Relativgeschwindigkeit der dort vorhandenen Eintrittsströmung gerichtet, während ein Schenkel des anderen Knies zu der Austrittsöffnung hinleitet und in Richtung der dort vorhandenen Relativgeschwindigkeit der Austrittsströmung verläuft. Die jeweils anderen Schenkel der beiden Umlenkknie sind auf einen in etwa radialen Verbindungsabschnitt hingerichtet, der die beiden Umlenkknie miteinander verbindet.

Bei der Strömungsmaschine soll eine Verringerung des Stufengefälles ohne Verminderung von Umfangs- und Absolutgeschwindigkeiten erreicht werden. Weiterhin soll einem kleinen Volumendurchsatz auch ein relativ kleines Stufengefälle zugeordnet und die Schnelläufigkeit der Maschine erhöht werden.

Hierfür sind bei der Strömungsmaschine der zu der Eintrittsöffnung hinführende Schenkel des einen Umlenkknies und der zu der Austrittsöffnung hinleitende Schenkel des anderen Umlenkknies so gerichtet, daß die Tangentialkomponenten der Relativgeschwindigkeiten an den Eintritts- und Austrittsöffnungen gleich gerichtet sind oder diese Tangentialkomponenten an den Eintrittsöffnungen oder an den Austrittsöffnungen ganz entfallen.

Fig. 3

Croydon Printing Company Ltd.

0005430

PATENTANWALTE

A. GRÜNECKER
DIPL.-ING

H. KINKELDEY
DR -ING

W. STOCKMAIR
DR.-ING · AeE (CALTECH)

K. SCHUMANN
DR RER NAT · DIPL -PHYS

P. H. JAKOB
DIPL -ING

G. BEZOLD
DR RER NAT · DIPL-CHEM

8 MÜNCHEN 22
MAXIMILIANSTRASSE 43

Bachl Herbert Professor Dr.
Stolzingstraße 4
8000 München 81

PA 12966
EP 7

Strömungsmaschine

Die Erfindung bezieht sich auf eine Strömungsmaschine mit wenigstens einem im wesentlichen scheibenförmigen Laufrad, das in sich Strömungskanäle für ein Strömungsmittel enthält, deren Eintrittsöffnungen sich insgesamt an der einen Stirnseite des Laufrades befinden, während die jeweiligen Austrittsöffnungen an der anderen Stirnseite angeordnet sind und alle Eintrittsöffnungen einen vorbestimmten Abstand zur Drehachse aufweisen, der verschieden ist, vom entsprechenden Abstand der Austrittsöffnungen von der Drehachse, wobei jeder Strömungskanal jeweils ein radial ferneres und ein radial näheres Umlenkknie mit je zwei Schenkeln aufweist, die miteinander etwa einen 90 Grad Winkel bilden, wobei ein Schenkel des radial ferneren, bzw. radial näheren Knies zu der Eintrittsöffnung hinführt und in Richtung der Relativgeschwindigkeit der dort vorhandenen Eintrittsströmung des Strömungsmittels verläuft und ein Schenkel des radial näheren, bzw. radial ferneren Knies zu der Austrittsöffnung hinleitet und in Richtung der Relativgeschwindigkeit der Austrittsströmung verläuft, während der jeweilige andere Schenkel zu einem gemeinsamen, in etwa radialen Verbindungsabschnitt hingerichtet ist, der die beiden Umlenkknie miteinander verbindet.

Die vorstehende Beschreibung bezieht sich auf zentripetal durchströmte Strömungswege im Laufrad, wenn die Austrittsöffnungen radial näher an der Drehachse liegen als die Eintrittsöffnungen. Das Arbeitsmittel kann jedoch bei Kraft- und Arbeitsmaschinen im Laufrad auch zentrifugal geführt werden. In diesem Fall befinden sich die Eintrittsöffnungen radial näher an der Drehachse als die Austrittsöffnungen. Diese Ausführungsform wird auch von der Erfindung umfaßt.

Aus der amerikanischen Patentschrift 4 029 431 (DE-OS 24 40 475) ist eine Strömungsmaschine der eingangsgenannten Art bekannt, in der die Knie der Strömungskanäle so gerichtet sind, daß die Axialkomponenten der Relativgeschwindigkeit an den Eintritts- und Austrittsöffnungen in der gleichen Richtung verlaufen, während die Tangentialkomponenten einander entgegengerichtet sind. Die bekannte Strömungsmaschine ist als Kraft- und Arbeitsmaschine besonders dann geeignet, wenn eine Auslegung für kleine Schnellläufigkeit, d.h., für - bezogen auf das Stufengefälle - kleine Volumendurchsätze erforderlich ist. Bei hoher tangentialer Umlenkung der Strömung im Laufrad ergeben sich nämlich kleine Relativgeschwindigkeiten, die einen verlustarmen Durchsatz auch kleinerer Volumenströme ermöglichen, gleichzeitig aber auch relativ hohe Stufengefälle bei Walh ausreichend hoher Umfangs- und Absolutgeschwindigkeiten am
Ein- bzw. Austritt.

Eine weitere vorteilhafte Anwendung dieser Bauart ist
die Verdichtung bzw. Entspannung von Gasgemischen mit
oder ohne Flüssigkeitsbeimischungen in technologischen
Prozessen, bei denen im Verlaufe der Zustandsänderung
Teilströme beigemischt oder entnommen werden. Solche
Misch- bzw. Trennvorgänge werden nämlich außerordentlich unterstützt durch die Sekundärströmungen, die sich
durch die Zentrifugalkraft in den Krümmungen der Strömungskanäle bilden. Bei diesen technologischen Prozessen
ist es mitunter wünschenwert, nicht nur den Volumen--
durchsatz sondern auch das Stufengefälle gering zu
halten, um eine möglichst feine Abstufung der Zustandsänderung zu erzielen. Eine solche Verminderung des
Stufengefälles kann natürlich durch eine Verringerung
der Umfangs- und Absolutgeschwindigkeiten am Ein- bzw.
Austritt erreicht werden, die jedoch eine Vergrößerung
der Maschine bei gegebener Leistung und damit einen
erhöhten Platz- und Materialbedarf und eine Verlängerung
der Strömungswege im Laufrad erfordern.

Es wird nun die Aufgabe gestellt, eine solche Verringerung des Stufengefälles ohne Verminderung von
Umfangs- und Absolutgeschwindigkeiten zu erzielen und
auf diese Weise einem kleinen Volumendurchsatz auch ein
relativ kleines Stufengefälle zuzuordnen und die Schnellläufigkeit der Maschine zu erhöhen.

Diese Aufgabe wird erfindungsgemäß dadurch gelöst, daß
der zu der Eintrittsöffnung hinführende Schenkel des
radial ferneren Umlenkknies und der zu der Austrittsöffnung hinleitende Schenkel des radial näheren Umlenkknies so gerichtet sind, daß die Tangentialkomponenten
der Relativgeschwindigkeit an den Eintritts- und Austrittsöffnungen gleichgerichtet sind oder diese Tangen-

tialkomponenten an den Eintrittsöffnungen oder an den Austrittsöffnungen ganz entfallen.

Bei der Erfindung ist also nicht nur der Fall gegeben, daß das Arbeitsmittel durch die Strömungsmaschine hindurchgeführt wird, sei es, daß diese als Arbeits- oder als Kraftmaschine eingesetzt ist, es ist bei der erfindungsgemäßen Lösung auch möglich, Einfluß zu nehmen, auf die physikalischen und/oder chemischen Eigenschaften des Arbeitsmittels.

Dieser Einfluß kann verstärkt dadurch erfolgen, daß erfindungsgemäß die Zumischung und Abtrennung von Teilströmen nicht außerhalb der Maschine, sondern in den Krümmern der Strömungswege selbst erfolgen. Zu diesem Zweck kann, wie an sich bekannt, (Zeitschrift Engergie, Jahrgang 28, Nr. 6/7, 1976, Seite 171 ff), am Außenumfang des radial weiter oder des radial zur Drehachse näher liegenden Knies eines jeden Strömungskanals je einer Lauf- bzw. Leitradstufe wenigstens eine Öffnung vorgesehen sein, durch die über Nebenkanäle im Lauf- bzw. Leitrad Teilströme herausgeführt oder dem Hauptstrom zugeführt werden.

Bei vielen technologischen Prozessen, die bei hohen Drücken und Temperaturen ablaufen, z.B. bei der Anlagerung von Wasserstoff an verschiedene Ausgangsstoffe, entstehen Gemische zunächst gasförmiger Komponenten, aus denen nach erfolgter Druck- und Temperaturabsenkung die gebildeten Reaktionsprodukte ausgeschieden werden. Beispiele solcher Prozesse sind die Ammoniak- und die Methanolsynthese und die Hydrierung von Kohlen oder schwersiedenden Ölfraktionen zu Benzin und zu anderen Kohlenwasserstoffen, die als Zwischenprodukt der chemischen Industrie benötigt werden. Bei diesen Prozessen muß das verbleibende Restgas z.B. Wasserstoff, der bei der Reaktion im Überschuss benötigt wird meist wieder erwärmt, verdichtet und in den Reaktionsbehälter rückgeführt werden. Solche Prozesse erfordern einen hohen Aufwand an mechanischer (elektrischer) Energie zur Verdichtung und Umwälzung der gasförmigen Komponenten.

Dieser Energieaufwand kann in einen Überschuß an mechanischer (elektrischer) Energie umgewandelt werden, wenn dem technologischen Prozeß ein thermodynamischer Prozeß überlagert und das aus dem Reaktor mit hohem Druck und hoher Temperatur austretende Gas in einer Kraftmaschine entspannt wird. Für solche Aufgaben sind jedoch die konventionellen Bauarten von Kraftmaschinen nicht geeignet, weil sie nur bei sehr großen Volumendurchsätzen gute Wirkungsgrade erzielen und die Strömungswege im Laufrad keine radial-axiale Umlenkung besitzen, die eine Konzentration und eine selektive Ausscheidung der auskondensierenden Gemischbestandteile ermöglicht. Eine Strömungsmaschine der beschriebenen Bauart kann dagegen die Aufgaben eines maschinellen Trennapparates (einer Zentrifuge) und einer Kraftmaschine im gleichen Arbeitsgang verbinden und als eine Schleuder-Gasturbine arbeiten. Die Ausscheidung der Teilströme kann primär z.B. im äußeren Krümmer der Strömungskanäle eines zentrifugal durchströmten Laufrades mit Nachabscheidung im anschließenden Leitrad oder auch in einem von ihnen nach außen durchströmten Leitrad mit Nachabscheidung im anschließenden, zentripetal durchströmten Laufrad erfolgen.

Wenn sich die Reaktionsprodukte aus Fraktionen mit unterschiedlichen Siedebereichen zusammensetzen, muß zu ihrer Trennung eine meist aufwendige Destillationsanlage nachgeschaltet werden. Auch diese Anlage kann wenigstens zum Teil eingespart und eine maschinelle, fraktionierte Destillation bereits in einer Schleuder-Gasturbine vorgenommen werden, wenn der größte Teil des in einer Stufe ausgeschleuderten Produkts über eine Pumpe - vergleichbar einer Speisepumpe - in einen von außen beheizten Verdampfer gefördert und der Dampf dem Hauptgasstrom in einem höheren Druck- und Temperaturbereich wieder zugesetzt wird. Eine solche Rückführung steigert nicht nur die Konzentration der Produkte, sondern auch die Ausbeute an mechanischer Energie.

Ein Zusatz von Teilströmen kann auch in Arbeitsmaschinen erfolgen- zweckmäßig in den gleich an den Eintritt anschließenden Krümmer - um im weiteren Strömungsweg eine gute Mischung zu erzielen. Auf diese Weise kann z.B. Wasser in Gas eingespritzt und seine Verdampfungswärme zur Kühlung des Verdichters genutzt werden.

Nachfolgend werden Ausführungsbeispiele der Erfindung anhand einer Zeichnung beschrieben. Es zeigt:

Figur 1    einen Radialschnitt durch eine erste Ausführungsform eines Läufers der erfindungsgemäßen Strömungsmaschine, mit einer zentripetalen Durchströmung,

Figur 2    eine Vorderansicht des in Figur 1 gezeigten Läufers,

Figur 3    einen Teilschnitt durch den Läufer von Figur 1 gemäß der Linie III-III,

Figur 4    eine perspektivische Ansicht des Läufers von Figur 1,

Figur 5    einen Radialschnitt durch eine zweite Ausführungsform eines Läufers der erfindungsgemäßen Strömungsmaschine, dessen Strömungskanäle im Außenbereich ohne Überdeckung ausgeführt sind.

Figur 6    eine Vorderansicht des Läufers von Figur 5.

Figur 7    einen Teilschnitt durch den Läufer von

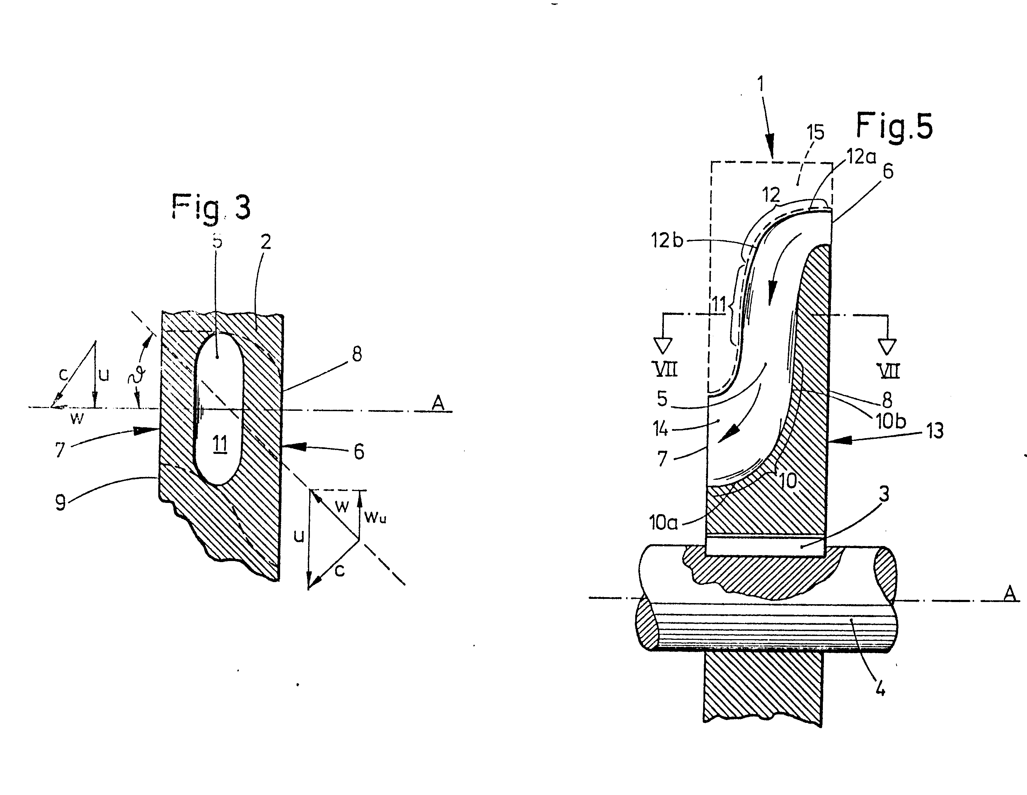

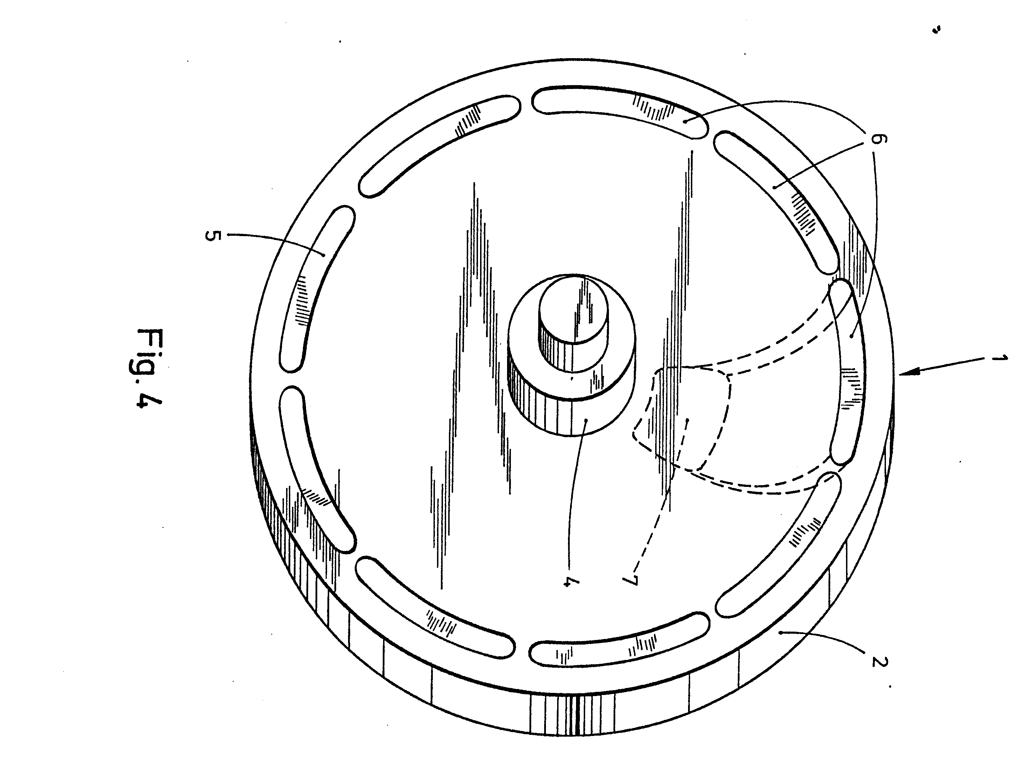

           Figur 5 gemäß der Linie VII-VII,

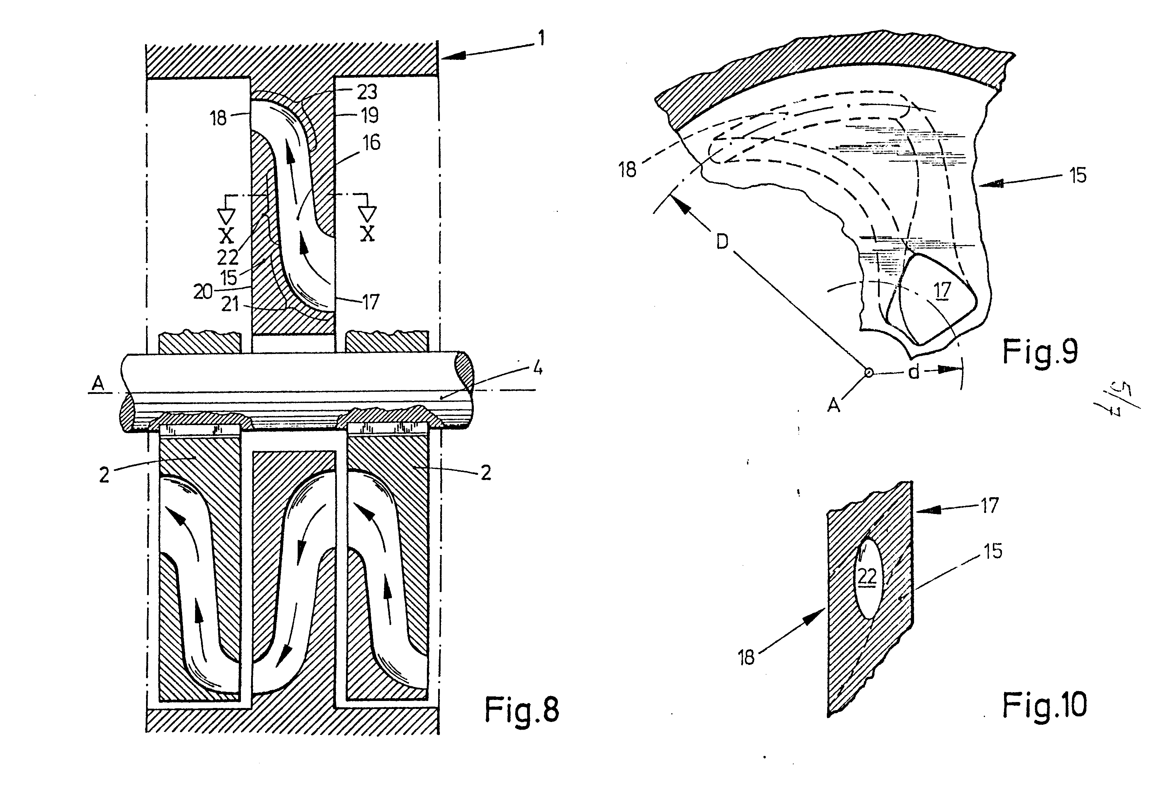

Figur 8    einen Radialschnitt durch eine mit zwei
           Laufrädern und einem Leitrad bestückte
           erfindungsgemäße Strömungsmaschine,

Figur 9    eine teilweise Vorderansicht des in Figur
           8 gezeigten Leitrades,

Figur 10   einen Teilschnitt durch das in Figur 8
           gezeigte Leitrad gemäß der Linie X-X,

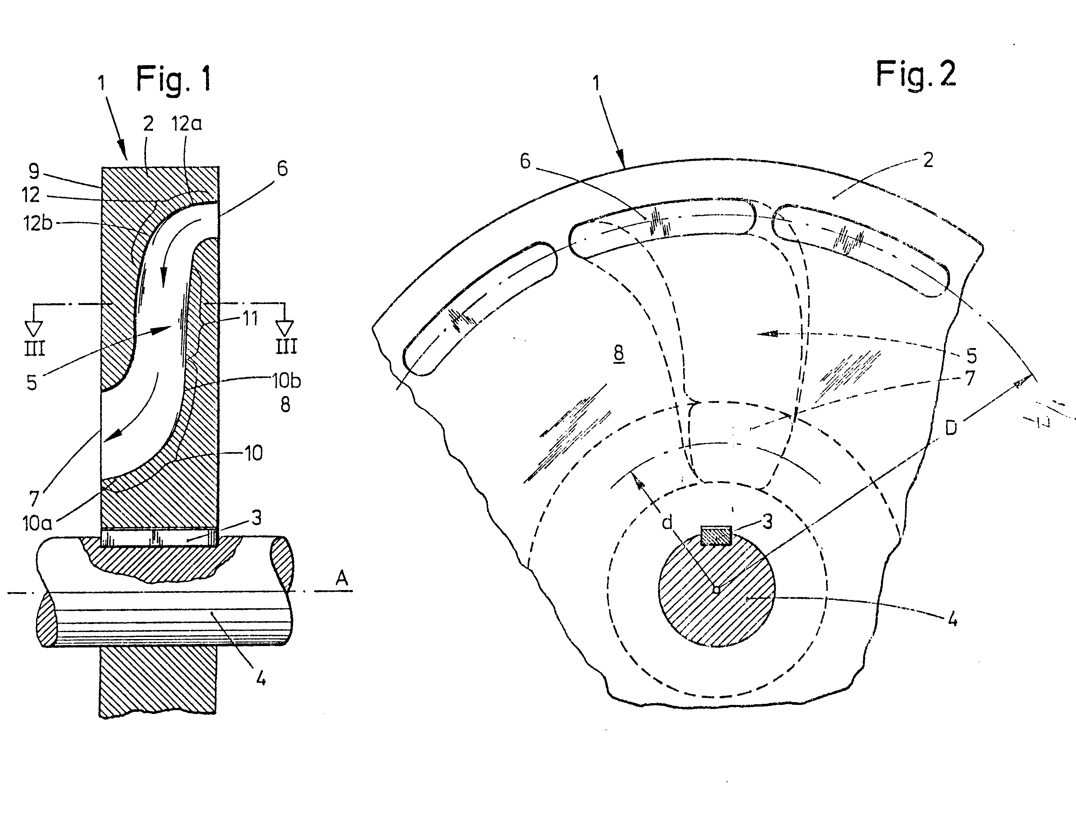

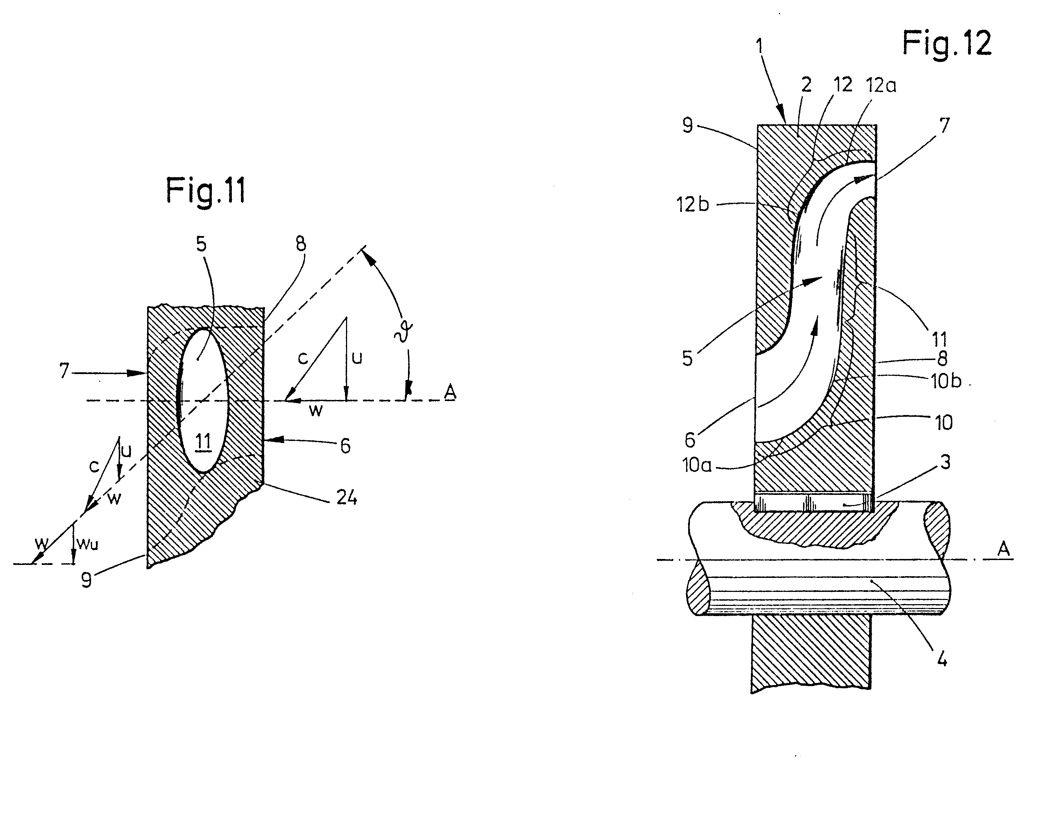

Figur 11   einen Teilschnitt durch eine dritte Ausführungsform eines sonst nicht gezeigten
           Laufrades für eine erfindungsgemäße
           Strömungsmaschine, wobei die Schnittlinie
           durch das Laufrad ähnlich gelegt ist, wie
           in Figur 1 die Linie III-III,

Figur 12   eine Schnittansicht durch eine Ausführungsform eines Läufers gemäß Figur 1, bei der
           jedoch eine zentrifugale Durchströmung gegeben ist, und

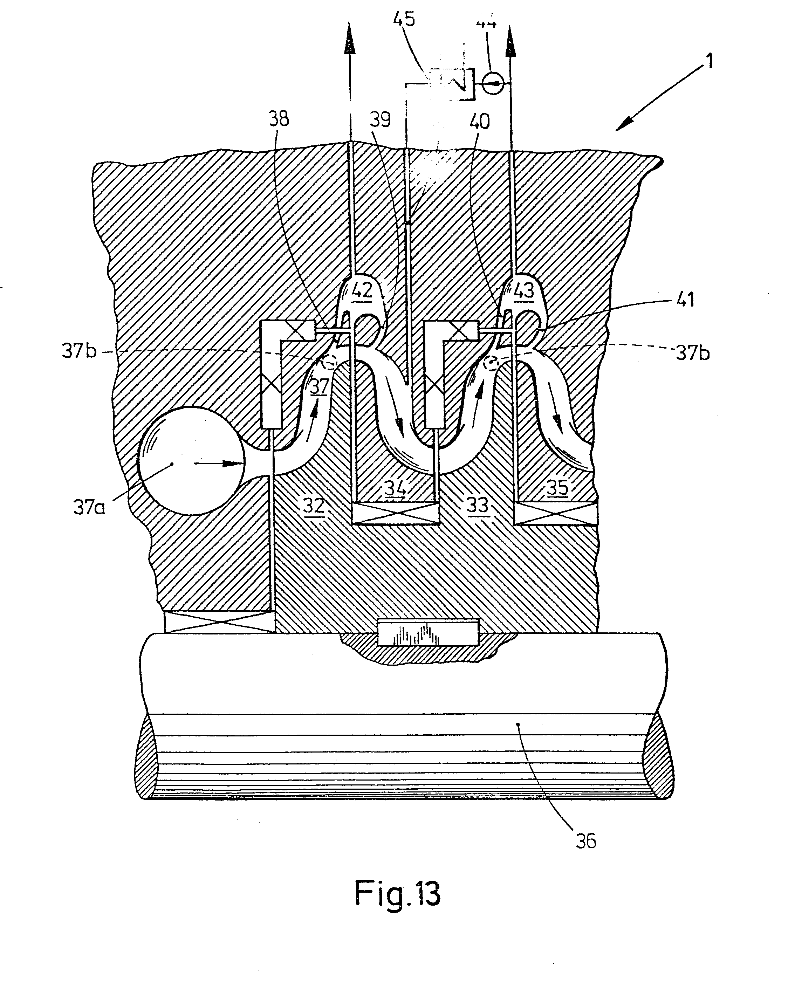

Figur 13   einen Radialschnitt durch eine erfindungsgemäße Strömungsmaschine, die als
           Schleudergasturbine für Wasserstoffentspannung ausgebildet ist.

In den Figuren 1 bis 4 ist eine erfindungsgemäße
Strömungsmaschine 1 mit einer ersten Ausführungsform
eines Laufrades 2 gezeigt. Das Laufrad ist scheibenförmig gestaltet und z.B. mit Hilfe eines Nutkeiles 3
auf einer Welle 4 drehfest gelagert.

Das Laufrad besitzt im gezeigten Fall neun Strömungskanäle 5, die für den Durchfluß eines Strömungsmittels
dienen. Sie besitzen Eintrittsöffnungen 6 und Austrittsöffnungen 7. Den Figuren 2 und 4 ist zu entnehmen, daß die Eintrittsöffnungen von Schlitzen gebildet werden, deren Ecken abgerundet sein können. Die
Schlitze liegen alle auf einem zur Achse der Welle 4
konzentrischen Ring, dessen mittlerer Durchmesser in
Figur 2 mit D bezeichnet ist.

Die Austrittsöffnungen 7 sind dagegen gemäß der in
Figur 2 gezeigten Gestaltung in radialer Richtung
höher wie die Eintrittsöffnungen, während sie in Umfangsrichtung schmäler sind. Daraus ergibt sich ein
in etwa quadratisches bzw. kreisförmiges Bild bei den
Austrittsöffnungen.

Auch die Austrittsöffnungen liegen alle auf einem zur
Achse der Welle 4 konzentrischen Ring, dessen mittlerer
Durchmesser in Figur 2 mit d bezeichnet ist.

Im gezeigten Fall ist d nur etwa ein Drittel so groß
wie D. Dies bedeutet, daß die Austrittsöffnungen sich
sehr viel näher an der Welle befinden, als die Eintrittsöffnungen. Insbesondere aus Figur 1 kann entnommen werden, daß sich die Eintrittsöffnungen 6 an
der einen Stirnseite 8 des scheibenförmigen Laufrades 2
befinden, während die Austrittsöffnungen sich an der
gegenüberliegenden Stirnseite 9 befinden.

Um die Verbindung herzustellen zwischen der Eintrittsöffnung 6 und der entsprechenden Austrittsöffnung 7 ist
im Inneren des Laufrades der bereits angesprochene
Strömungskanal 5 vorhanden. Dieser setzt sich aus einem
zur Drehachse näher liegendem Knie 10, einem Verbindungsabschnitt 11 und einem zur Drehachse fernerem Knie 12 zusammen. Das Knie 10 schließt mit einem Schenkel 10a direkt an die Austrittsöffnung 7 an. Der Verbindungsabschnitt 11 stellt einen in etwa radial durchströmten Verbindungskanal zwischen einen Schenkel 10b des Knies 10 und einen Schenkel 12b des Knies 12 dar. Das Knie 12 schließt mit einem Schenkel 12a direkt an die Eintrittsöffnung 6 an. Die beiden Schenkel eines Knies schließen miteinander etwa einen Winkel von 90 Grad ein. Die Strömungskanäle können über die ganze Länge entweder die von den Eintritts- bzw. Austrittsöffnungen geprägte rechteckige Querschnittsform beibehalten oder anschließend an diese Öffnungen nach einem Übergang rund oder oval gestatet sein.

In Figur 3 der Zeichnung ist ein Teilschnitt durch das Laufrad von Figur 1 gemäß der Linie III-III gezeigt. In der Mitte des Laufrades ist deutlich der im vorliegenden Fall vorwiegend radial verlaufende Verbindungsabschnitt 11 zu sehen, der an dieser Stelle einen ovalen Querschnitt aufweist. Der weitere Verlauf des Strömungskanals ist strichpunktiert angedeutet. Es ist zu erkennen, daß im Bereich der Eintrittsöffnung die Strömung mit der Relativgeschwindigkeit w einströmt. An der Eintrittsseite ist ein entsprechendes Geschwindigkeitsdreieck angelegt. Die Relativgeschwindigkeit w ist so gerichtet, daß die Strömung bei ihrem Eintritt in das Laufrad ohne wesentliche Verluste von diesem aufgenommen und dem Strömungskanal zugeführt werden kann. Im Geschwindigkeitsdreieck ist dann noch die Umfangsgeschwindigkeit u und die Absolutgeschwindigkeit c angegeben, sowie die Tangentialkomponente $W_u$ der Relativgeschwindigkeit w. An der Austrittsseite bei der Öffnung 7 ist zu erkennen, daß die Strömung eine Umlenkung erfahren hat. Sie strömt quer zur Scheibenebene des Laufrades, also in Achsrichtung der Welle 4 aus den Austrittsöffnungen 7 aus. Auch dies ist anhand eines Geschwindigkeitsdreiecks dargestellt. Die Relativgeschwindigkeit w deutet in die durch die Linie A angedeutete Achse der Welle 4. Die Umfangsgeschwindigkeit u ist geringer, da das Strömungsmittel das Laufrad an einem radial weiter innen liegenden Ort verläßt, als es in dasselbe eingeführt wurde. Die sich aus der Relativgeschwindigkeit w und der Umfangsgeschwindigkeit u ergebende Absolutgeschwindigkeit c ist ebenfalls gezeigt. Die Tangentialkomponente der Relativgeschwindigkeit ist an der Austrittsseite gleich Null. Es ist festzustellen, daß die Schaufelarbeit beim Durchgang durch das Laufrad relativ gering ist. Der axiale Umlenkwinkel $\vartheta$ zwischen der Zu- und der Abströmung beträgt lediglich etwa 40 Grad. Die eben erläuterte Ausführungsform eignet sich besonders als Kraftmaschine.

Durch diese Gestaltung kann die erfindungsgemäße Strömungsmaschine 1 den Vorteil kleiner Volumendurchsätze mit dem Vorteil eines geringen Stufengefälles verbinden. Damit ist die erfindungsgemäße Strömungsmaschine speziell gut für technologische Prozesse geeignet, bei denen in den Übergangsbereichen der Zustandsänderungen möglichst fein abgestufte chemische oder physikalische Reaktionen durchgeführt werden können. Ein vorgegebenes Druckgefälle kann nämlich in viele Stufen aufgeteilt werden.

Aufgrund des geringen Reaktionsgrades im Laufrad 2 entstehen bei der erfindungsgemäßen Lösung praktisch keine Dichtungsprobleme. Zur Unterbringung von Labyrinthdichtungen und/oder Spitzendichtungen steht aber auch hinreichend Platz zwischen den Ein- und Austrittsöffnungen auf der Mantelfläche und/oder den beiden Stirnseiten 7, 8 zur Verfügung. Darüber hinaus werden die Strömungsverluste durch die Verkleinerung des Umlenkwinkels $\vartheta$ vermindert.

In den Figuren 5, 6 und 7 ist eine zweite Ausführungsform 13 eines Laufrades für eine erfindungsgemäße Strömungsmaschine 1 gezeigt. Da sich die zweite Ausführungsform nur in einigen Bereichen von der ersten Ausführungsform unterscheidet, wird lediglich auf die Unterschiede eingegangen und im übrigen auf die Beschreibung des ersten Ausführungsbeispieles verwiesen. Gleiche Teile haben gleiche Bezugsziffern.

Bei der zweiten Ausführungsform wurde auf die radial äußere Überdeckung der Strömungskanäle verzichtet. In Figur 5 ist deshalb lediglich ein volumenmäßig verkleinertes Laufrad gezeigt, das in radialer Richtung jeweils am äußeren Umfang der Strömungskanäle endet. Die zwischen den benachbarten Strömungskanälen vorhandenen Trennwände 14 enden frei. Beim Betrieb dieser Strömungsmaschine wird bis nahe an das Laufrad hin ein, in Figur 5 gestricheltes Gehäuse 15 herangeführt. In Anbetracht des in der erfindungsgemäßen Maschine verarbeiteten niedrigen Druckgefälles wird es sich in den meisten Anwendungsfällen erübrigen, zwischen dem Gehäuse 15 und dem Laufrad 13 aufwendige Dichtungen vorzusehen.

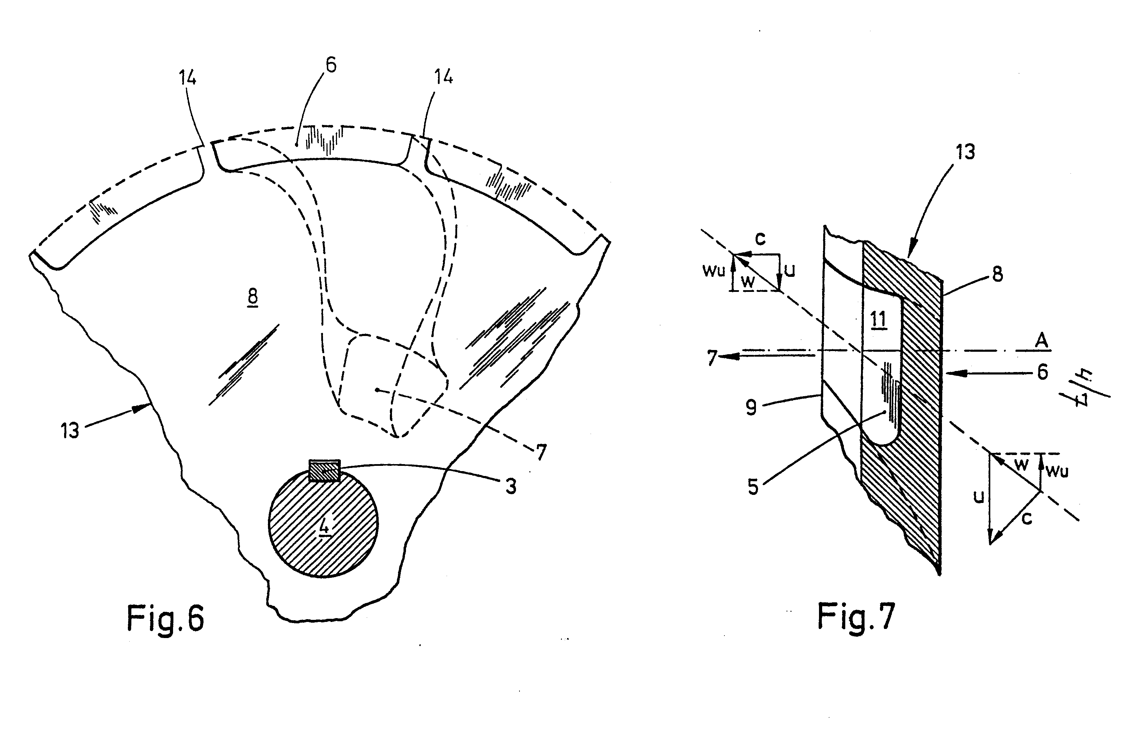

In Figur 7 ist ein Teilschnitt durch das Laufrad 13 im Bereich eines Strömungskanals 5 gezeigt. Es ist zu erkennen, daß der Verbindungsabschnitt 11 bei dieser Ausführungsform im wesentlichen gleich gestaltet ist, wie der Verbindungsabschnitt 11 der ersten Ausführungsform von Figur 3. Es besteht allerdings die Ausnahme, daß der Strömungskanal radial nach außen hin offen ist.

Bei der in Figur 7 gezeigten zweiten Ausführungsform erfährt die Strömung im Gegensatz zur ersten Ausführungsform im Laufrad keine axiale Umlenkung. Durch das an der Eintrittsseite angegebene Geschwindigkeitsdreieck ist zu erkennen, daß die Strömung mit der Relativgeschwindigkeit w in die Eintrittsöffnungen 6 eintritt und den Strömungskanal in gleicher Richtung mit der Relativgeschwindigkeit w an der Austrittsseite bei der Austrittsöffnung 7 wieder verläßt. Der axiale Umlenkwinkel $\gamma$ beträgt O Grad. Natürlich ist an der Austrittsseite die Umfangsgeschwindigkeit aufgrund der radial weiter innen liegenden Ausströmung geringer. Da bei dem gezeigten Laufrad die axiale Umlenkung vollkommen entfällt, sind die Strömungsverluste entsprechend gering. Die Tangentialkomponenten der Relativgeschwindigkeiten an der Eintritts- und Austrittsseite sind zwar verschieden groß, aber gleich gerichtet.

In Figur 8 ist ein Teil einer Strömungsmaschine 1 und zwar ein Leitrad 15 zwischen zwei Laufrädern 2 gezeigt. Der Darstellung ist zu entnehmen, daß die im Leitrad vorhandenen Strömungskanäle im wesentlichen spiegelbildlich zu den Strömungskanälen in den Laufrädern verlaufen. Es ist festzustellen, daß in den Laufrädern eine zentripetale Strömung in den Strömungskanälen existiert, während sie im Leitrad bezüglich der Welle 4 zentrifugal verläuft.

Die Strömungskanäle 16 in dem Leitrad weisen jeweils eine radial innen liegende Eintrittsöffnung 17 und eine radial weiter außen liegende Austrittsöffnung 18 auf. Während die Eintrittsöffnungen alle auf der einen Stirnseite 19 des ebenfalls etwa scheibenförmigen Leitrades 15 angeordnet sind, befinden sich die Austrittsöffnungen 18 an der gegenüberliegenden andern Stirnseite 20.

Wie bereits bei den Laufrädern 2 und 13 besteht jeder Strömungskanal 16 des Leitrades 15 aus einem sich an die Eintrittsöffnung 17 anschließenden Knie 21, sowie sich einem daran anschließenden, in etwa radialen Verbindungsabschnitt 22 und einem radial äußeren, sich am Verbindungsabschnitt anschließenden Knie 23, das die Verbindung zur Austrittsöffnung 18 herstellt. Beide Krümmer lenken in radialer Richtung etwa um 90 Grad um.

In Figur 9 ist ein Teilausschnitt des Leitrades 15 in der Vorderansicht dargestellt. Es ist die Eintrittsöffnung 17 zu erkennen, die im wesentlichen gleichgestaltet ist, wie die Austrittsöffnung 7 der ersten und zweiten Ausführungsform von Figur 1 und 5. Die Austrittsöffnungen 18 sind ebenso schlitzartig geformt wie die Eintrittsöffnungen 6 der ersten beiden Ausführungsbeispiele. Alle Austrittsöffnungen 18 des Leitrades befinden sich auf einem ebensolchen, zur Achse A der Welle 4 konzentrischen Ring mit einem mittleren Durchmesser D, wie dies in entsprechender Weise bei den Laufrädern der Fall ist. Das gleiche gilt für die Eintrittsöffnungen 17, die sich mit ihrer Öffnungsmitte ungefähr auf einem Ring mit dem mittleren Durchmesser d befinden, der identisch ist mit dem mittleren Durchmesser d von Figur 2. Durch diese Bemessungen wird ein reibungsarmer Übergang vom Laufrad auf das Leitrad bzw. umgekehrt sichergestellt.

In Figur 10 ist ein Teilschnitt gemäß der Linie X-X in Figur 8 gezeigt. Es ist zu erkennen, daß innerhalb des gezeigten Leitrades 15 die Strömung nahezu nicht axial umgelenkt wird.

In Figur 11 ist eine dritte Ausführungsform 24 eines Laufrades gezeigt, das den prinzipiellen Aufbau des in den Figuren 1 bis 3 dargestellten Laufrades 2 besitzt. Lediglich die Strömungskanäle sind so gerichtet, daß eine anders geartete Umlenkung des Strömungsmittels erfolgt. Die entsprechenden Teile sind deshalb mit den gleichen Bezugsziffern wie beim ersten Ausführungsbeispiel versehen.

Es ist zu erkennen, daß beim Laufrad 24 die Strömung in Richtung der Achse A der Welle 4 in die Eintrittsöffnungen 6 eintritt. Die Relativgeschwindigkeit w verläuft parallel zur Achse A. Es gibt hierzu keine Tangentialkomponente. An der Austrittsseite im Bereich der Austrittsöffnungen 7 verläuft dagegen die Relativgeschwindigkeit nicht in Achsrichtung. Sie ist um den axialen Umlenkwinkel $\vartheta$ verschwenkt, der hier ungefähr 45 Grad beträgt. Die Tangentialkomponente $W_u$ der Relativgeschwindigkeit w ist gesondert dargestellt. Dieses Laufrad 24 ist ein Beispiel dafür, daß die Strömung in axialer Richtung den Eintrittsöffnungen zugeführt und anschließend axial verhältnismäßig gering um

den Winkel $\gamma$ abgelenkt wird.

In Figur 12 ist ein Laufrad 8 gezeigt, das von seiner Gestalt her im wesentlichen dem Laufrad von Figur 1 entspricht. Es ist allerdings zu bemerken, daß bei dieser Ausführungsform die Eintrittsöffnungen 6 näher an der Drehachse A angeordnet sind, als die Austrittsöffnungen 7. Es ergibt sich infolgedessen eine zentrifugale Strömung in den Strömungskanälen. Diese Lösung ist sowohl für Kraft- als auch für Arbeitsmaschinen gleichermaßen geeignet.

Auch bei zentrifugaler Durchströmung der Strömungskanäle können die Eintritts- bzw. Austrittsöffnungen so gestaltet sein, daß sich in analoger Form Strömungen einstellen, wie dies in den Figuren 3, 7 und 11 gezeigt ist.

In Figur 13 ist ein Ausführungsbeispiel einer Strömungsmaschine 1 gezeigt, bei dem die zwei gezeigten Laufräder 32 und 33 Strömungskanäle mit zentrifugalem Strömungsverlauf aufweisen, wie sie z.B. in den Figuren 1 bis 3 gezeigt sind. Die gezeigte Strömungsmaschine 1 ist zweistufig ausgeführt und besitzt infolgedessen auch zwei Laufräder 34 und 35, deren Strömungskanäle in etwa spiegelbildlich zu denjenigen der Laufräder gestaltet sind.

Die gezeigte Strömungsmaschine stellt eine Schleuder-Gasturbine für die Wasserstoffentspannung mit zentrifugaler Strömung in den Laufrädern dar. Die Laufräder 32 und 33 sind auf einer Welle 36 drehbar gelagert. Von einem Vorratskanal 37a wird das aus Wasserstoff bestehende Strömungsmittel über eine Eintrittsöffnung dem Strömungskanal 37 des Laufrades 32 zugeführt. Die innerhalb des Laufrades 32 zentrifugal verlaufende Strömung wird zur Austrittsseite hin über einen entsprechenden Krümmer des Strömungskanals wieder zu an der Stirnseite des Laufrades vorhandenen Austrittsöffnung hin umgelenkt, worauf der Übergang in das Leitrad 34 erfolgt. Innerhalb des Leitrades verläuft der Strömungsweg zentripetal. Vor dem Übergang in die zweite Stufe, d.h. in das Laufrad 33 erfolgt wiederum die Umlenkung in einem entsprechenden Krümmer. Innerhalb des Laufrades 33 ist wieder eine zentrifugale Strömung gegeben. Im darauf folgenden Leitrad 35 wiederum eine zentripetale.

Jeweils an den Außenumfängen des radial weiter von der Welle 4 entfernten Krümmers eines jeden Strömungskanals sowohl der Lauf- als auch der Leiträder sind zusätzliche Öffnungen 38, 39, 40 und 41 vorhanden, die jeweils dazu dienen, einen Teilstrom aus dem Strömungsmittel aus den entsprechenden Strömungskanälen nach außen zu führen.

Im vorliegenden Fall werden diese Öffnungen dazu benutzt, um mit Hilfe der Zentrifugalkraft im Verlauf der Zustandsänderung kondensierende Bestandteile des Gasgemisches auszuschleudern. Im Bereich der radial außen liegenden Krümmer jedes Strömungskanals tritt nämlich aufgrund der zentrifugalen Strömung stets in Figur 13 gestrichelt dargestellte Strömungswirbel 37b auf, die im Verlauf der Zustandsänderung auskondensierte Flüssigkeitsteilchen am Außenrand des Krümmers konzentrieren und ihre Ausscheidung über die Öffnungen 38 und 40 erleichtern. Restbestände, die in die anschließenden Leiträder mitgerissen werden, können dort durch die weiterhin noch vorhandenen Öffnungen 39 und 41 abgezogen werden. Jeweils die Öffnungen 38 und 39 besitzen einen gemeinsamen Sammelkanal 42 und die Öffnungen 40 und 41 den Sammelkanal 43.

-17-

Dieser Abscheidungsvorgang kann mit einer maschinellen fraktionierten Destillation zur Steigerung des Reinheitsgrades des Produktes verbunden werden. Zu diesem Zweck wird, wie in der zweiten Stufe beim Laufrad 33 und Leitrad 35 dargestellt, der größte Teil der ausgeschiedenen Flüssigkeit in eine frühere Stufe zurückgeführt und zwar wird - wie bei der Umwälzung des Sumpfproduktes einer Destillationskolonne - zuerst der Druck durch eine Rückführpumpe 44 erhöht und anschließend die Flüssigkeit in einem Verdampfer 45 durch Wärmezufuhr von außen wieder verdampft. Die Rückführung in das System geschieht über eine Rückführleitung 46, die tangential in zentripetaler Richtung in den Strömungskanal des Leitrades 34 mündet. Durch die Rückführung wird nicht nur die Maschinenleistung erhöht, sondern auch die Konzentration des Strömungsmittels und damit der Reinheitsgrad des Produktes. Ein wesentlicher Teil der nachgeschalteten Destillationsanlagen kann hiermit eingespart werden. Eine Schleuder-Gasturbine der dargestellten Art kann auch mit dem bei radialen Kraftmaschinen üblichen zentripetalen Strömungsverlauf in den Laufrädern ausgeführt und der Abscheidevorgang - allerdings ohne Unterstützung durch Zentrifugalkräfte - im wesentlichen in die Leiträder verlegt werden.

In analoger Weise kann eine Arbeitsmaschine durch solche Öffnungen ein zweites Strömungs- bzw. Arbeitsmittel zugeführt werden, das mit Hilfe der Wirbel nicht nur in die Strömungskanäle eingeleitet, sondern auch mit dem ersten Arbeitsmittel vermengt wird.

PATENTANWÄLTE

A. GRÜNECKER
DPL-ING

H. KINKELDEY
DR ING

W. STOCKMAIR
DR ING AeE ICALTECH

K. SCHUMANN
DR RER NAT DPL-PHYS

P. H. JAKOB
DPL-ING

G. BEZOLD
DR RER NAT DPL-CHEM

8 MÜNCHEN 22
MAXIMILIANSTRASSE 43

Bachl Herbert Professor Dr.        PA 12966
Stolzingstraße 4                       EP 7
8000  München  81

## Patentansprüche

1. Strömungsmaschine mit wenigstens einem, im wesentlichen scheibenförmigen Laufrad, das Strömungskanäle für ein Strömungsmittel aufweist, deren Eintrittsöffnungen sich an der einen Stirnseite des Laufrades befinden, während die jeweiligen Austrittsöffnungen an der anderen Stirnseite angeordnet sind und alle Eintrittsöffnungen einen vorbestimmten Abstand zur Drehachse aufweisen, der verschieden ist, vom entsprechenden Abstand der Austrittsöffnungen von der Drehachse, wobei jeder Strömungskanal jeweils ein radial ferneres und ein radial näheres Umlenkknie mit je zwei Schenkeln aufweist, die miteinander etwa einen 90 Grad Winkel bilden, wobei ein Schenkel des radial ferneren, bzw. radial näheren Knies zu der Eintrittsöffnung hinführt und in Richtung der Relativgeschwindigkeit der dort vorhandenen Eintrittsströmung des Strömungsmittels verläuft und ein Schenkel des radial näheren, bzw. radial ferneren Knies zu der Austrittsöffnung hinleitet und in Richtung der Relativgeschwindigkeit der Austrittsströmung verläuft, während der jeweilige andere Schenkel zu einem gemeinsamen, in etwa radialen Verbindungsabschnitt hingerichtet ist, der die beiden Umlenkknie miteinander verbindet, d a d u r c h g e k e n n z e i c h n e t , daß der zu der Eintrittsöffnung (6) hinführende Schenkel (12a) des einen Umlenkknies (12) und der zu der Austrittsöffnung (7) hinleitende Schenkel (10a) des anderen Umlenkknies (10) so gerichtet sind, daß die Tangentialkomponenten $(W_u)$ der Relativgeschwindigkeiten (w) an den Eintritts- und Austrittsöffnungen (6,7) gleichgerichtet sind oder diese Tangentialkomponenten $(W_u)$ an den Eintrittsöffnungen (6) oder an den Austrittsöffnungen (7) ganz entfallen.

2. Strömungsmaschine nach Anspruch 1, d a d u r c h g e k e n n z e i c h n e t , daß die Strömungskanäle (5) zumindest im Außenbereich des Laufrades ohne radiale Überdeckung ausgeführt sind (Figur 5).

3. Strömungsmaschine nach Anspruch 1 oder 2, d a - d u r c h g e k e n n z e i c h n e t , daß die Strömungskanäle (5) wenigstens eine Öffnung (38, 40) aufweisen, durch die ein Teilstrom des Strömungsmittels aus dem Strömungskanal (5) herausgeführt oder diesem zugeführt werden kann.

# Fig. 1

# Fig. 2

0005430 EP 7

Fig.5

Fig.3

Fig. 4

Fig.7

Fig.6

Fig.8

Fig.9

Fig.10

U005430 EP

Fig.11

Fig.12

Fig.13